# EUROPEAN PATENT APPLICATION

(11) **EP 1 952 861 A1**
(43) Date of publication of application: **06.08.2008**
(21) Application number: 06782666.9
(22) Date of filing: 10.08.2006
(51) Int. Cl.: A63F 13/00, G06T 17/40

(54) **GAME MACHINE, GAME IMAGE PROCESSING METHOD, AND INFORMATION STORAGE MEDIUM**

(30) Priority: 25.11.2005 JP 2005339719
(71) Applicant: Konami Digital Entertainment Co., Ltd., Tokyo 107-8324 (JP)
(72) Inventor: ASAMI, Yuichi, Tokyo 1078324 (JP)
(74) Representative: Winter, Brandl, Fürniss, Hübner Röss, Kaiser, Polte Partnerschaft Patent- und Rechtsanwaltskanzlei
(86) International application number: PCT/JP2006/315880
(87) International publication number: WO 2007/060770

(57) **Abstract**

When a viewpoint moves in a game space, the movement of the viewpoint is reflected in a game screen image to thereby improve the realism. A game machine for producing a screen image on a real time basis, the screen image showing a picture obtained by viewing from a predetermined viewpoint defined in a game space in a predetermined viewing direction, and displaying the screen image on a real time basis comprises a viewpoint moving unit (64) for moving a position of the viewpoint in the game space, an oscillation parameter update unit (60) for changing a predetermined oscillation parameter according to movement of the viewpoint in the game space, and an oscillating unit (68) for oscillating the position of the viewpoint or the viewing direction in the game space according to the predetermined oscillation parameter.

## Description

### TECHNICAL FIELD

The present invention relates to a game machine, a game machine image processing method, and an information storage medium, and more particularly to improvement of the realism of an image representative of a game space.

### BACKGROUND ART

Games which use three dimensional computer graphics have become widely popular. According to one of such games, an object (a game character object) representative of a game character is placed in a game space (a virtual three dimensional space), in which a viewpoint set in a position corresponding to the eyes of the game character object moves as the game character object moves. According to such a game, a screen image showing a picture obtained by viewing ahead of the game character (a viewing direction) from the viewpoint is produced on a real time basis, and the produced screen image is shown on a game screen on a real time basis. This makes it possible for the player looking at the game screen image to feel as if they themselves have become the game character in the game space.

Patent Document 1: Japanese Patent Laid-open Publication No. 2002-292119

### DISCLOSURE OF THE INVENTION

### Problems to be Solved by the Invention

However, according to the game using conventional three dimensional computer graphics, exhausting movement of the game character and viewpoint is not reflected in the screen image. That is, for example, an extent of tiredness of the game character, when the game character should get tired, is not reflected in the screen image. This leads to a problem of lack of realism.

The present invention has been conceived in view of the above, and aims to provide a game machine, a game machine image processing method, and an information storage medium which can reflect the movement of the viewpoint in the game space in the screen image to thereby improve the realism.

### Means for Solving the Problem

In order to address the above-described problem, according to one aspect of the present invention, there is provided a game machine for producing a screen image on a real time basis, the screen image showing a picture obtained by viewing from a predetermined viewpoint defined in a game space in a predetermined viewing direction, and displaying the screen image on a real time basis, comprising viewpoint moving means for moving a position of the viewpoint in the game space; oscillation parameter update means for changing a predetermined oscillation parameter according to movement of the viewpoint in the game space; and oscillating means for oscillating the position of the viewpoint or the viewing direction in the game space according to the predetermined oscillation parameter.

According to another aspect of the present invention, there is provided a game machine image processing method for producing a screen image on a real time basis, the screen image showing a picture obtained by viewing from a predetermined viewpoint defined in a game space in a predetermined viewing direction, and displaying the screen image on a real time basis, comprising a viewpoint moving step of moving the position of the viewpoint in the game space; a oscillation parameter update step of changing a predetermined oscillation parameter according to movement of the viewpoint in the game space; and a oscillating step of oscillating the position of the viewpoint or the viewing direction in the game space according to the predetermined oscillation parameter.

According to another aspect of the present invention, there is provided an information storage medium recording a program for causing a computer to function as image processing means for producing a screen image on a real time basis, the screen image showing a picture obtained by viewing from a predetermined viewpoint defined in a game space in a predetermined viewing direction, and displaying the screen image on a real time basis; viewpoint moving means for moving a position of the viewpoint in the game space; oscillation parameter update means for changing a predetermined oscillation parameter according to movement of the viewpoint in the game space; and oscillating means for oscillating the position of the viewpoint or the viewing direction in the game space according to the predetermined oscillation parameter. The computer may be, for example, a consumer game machine, a commercial game machine, a portable game machine, a portable phone, a portable data assistant, a personal computer, a server computer, and so forth. The program may be stored in a computer readable information storage medium, such as a CD-ROM, a DVD-ROM, a ROM cartridge, and so forth.

According to the present invention, as a viewpoint moves, an oscillation parameter changes accordingly. Further, according to the oscillation parameter, the position of the viewpoint or the viewing direction oscillates. With the above, a screen image showing a picture obtained by viewing from the viewpoint in the viewing direction also oscillates. That is, when the viewpoint moves in the game space, it can be preferably reflected in the game screen image, thereby improving the realism.

In one embodiment of the present invention, a character object may be placed in the position of the viewpoint in the game space, and the viewpoint moving means may cause the position of the viewpoint to move following the character object. In this case, the oscillating means may cause at least a part of the character object (for example, the head portion) to further oscillation according to the predetermined oscillation parameter. With the above, the realism can be further improved.

In one embodiment of the present invention, the oscillation parameter update means may change the predetermined oscillation parameter by a value according to a moving speed at which the viewpoint moves in the game space. With the above, movement of the screen image can be changed according to the moving speed, whereby the realism can be further improved.

In one embodiment of the present invention, the oscillation parameter update means may change the predetermined oscillation parameter according to elapse of time. With the above, movement of the screen image can be changed according to elapse of time, whereby the realism can be further improved.

### BRIEF DESCRIPTION OF THE DRAWINGS

Fig. 1 is a diagram showing a hardware structure of a game machine according to an embodiment of the present invention;
Fig. 2 is a diagram showing one example of a game space;
Fig. 3 is a diagram showing kinds of motion of a player game character object in the game space;
Fig. 4 is a diagram showing one example of a screen image shown on a monitor;
Fig. 5 is a diagram showing an oscillation parameter change amount table;
Fig. 6 is a diagram showing an oscillation extent table;
Fig. 7 is a functional block diagram of the game machine according to an embodiment of the present invention; and
Fig. 8 is a flowchart of image processing carried out in the game machine according to an embodiment of the present invention.

### BEST MODE FOR CARRYING OUT THE INVENTION

In the following, one embodiment of the present invention will be described in detail with reference to the accompanying drawings.

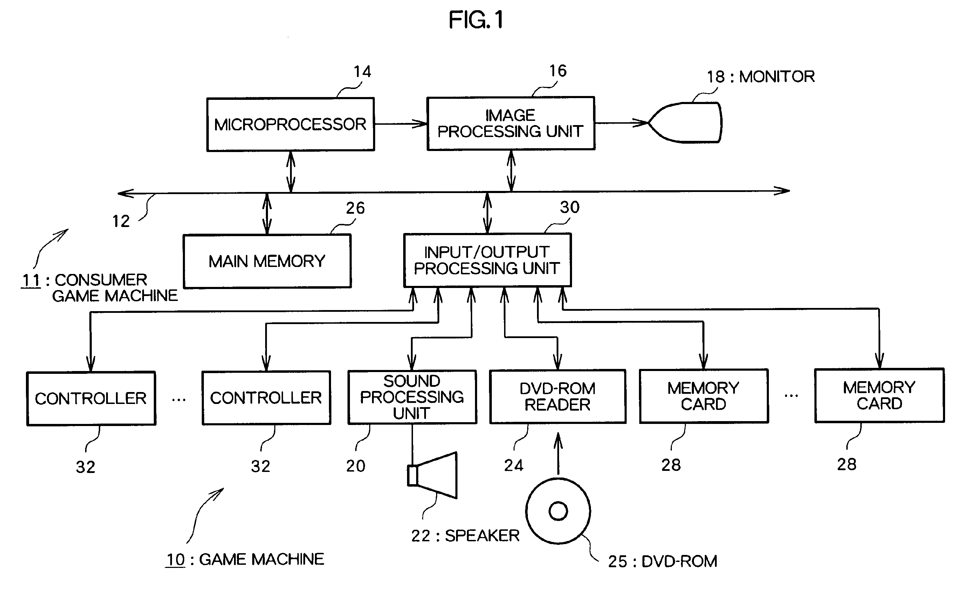

Fig. 1 is a diagram showing a hardware structure of a game machine according to an embodiment of the present invention. The shown game machine 10 comprises a consumer game machine 11 having a DVD-ROM 25 and a memory card 28 as information storage media mounted thereto, and a monitor 18 and a speaker 22 connected thereto. For example, the monitor 18 may be a home-use television receiver, and the speaker 22 may be a built-in speaker thereof. The game machine 10 operates as a sound player according to an embodiment of the present invention.

The consumer game machine 11 is a publicly known computer game system comprising a bus 12, a microprocessor 14, an image processing unit 16, a sound processing unit 20, a DVD-ROM reader 24, a main memory 26, an input/output processing unit 30, and a controller 32. The respective structural elements other than the controller 32 are accommodated in an enclosure.

The bus 12 is used for exchanging an address and/or data among the respective units of the consumer game machine 11. The microprocessor 14, the image processing unit 16, the main memory 26, and the input/output processing unit 30 are mutually connected via the bus 12 for data exchange.

The microprocessor 14 controls the respective units of the consumer game machine 11, based on an operation system stored in a ROM (not shown), a program read from the DVD-ROM 25, and data read from the memory card 28. The main memory 26 comprises a RAM, for example, into which a program read from the DVD-ROM 25 and/or data read from the memory card 28 is written as required. The main memory 26 is also used as a working memory of the microprocessor 14.

The image processing unit 16, which comprises a VRAM, renders a game screen image into the VRAM, based on the image data received from the microprocessor 14, then converts the content of the rendered game screen image into a video signal, and outputs the video signal to the monitor 18 (a game screen) at a predetermined timing.

The input/output processing unit 30 is an interface via which the microprocessor 14 accesses the sound processing unit 20, the DVD-ROM reader 24, the memory card 28, and.the controller 32. The sound processing unit 20, the DVD-ROM reader 24, the memory card 28, and the controller 32 are connected to the input/output processing unit 30.

The sound processing unit 20, which comprises a sound buffer, plays various sound data, such as game music, game sound effects, a message, and so forth, which is read from the DVD-ROM 25 and stored in the sound buffer, and outputs via the speaker 22. Specifically, the sound processing unit 20, which is capable of processing a predetermined number of channels, plays mixing sound data assigned to the respective channels and outputs via the speaker 22.

The DVD-ROM reader 24 reads a program from the DVD-ROM 25 according to an instruction sent from the microprocessor 14. It should be noted that although the DVD-ROM 25 is used here to provide a program to the consumer game machine 11, any other computer readable information storage medium, such as a CD-ROM, a ROM card, or the like, may be used. Alternatively, a program may be provided via a data communication network, such as the Internet, or the like, from a remote place to the consumer game machine 11.

The memory card 28 is formed including a nonvolatile memory (for example, EEPROM, or the like). The consumer game machine 11 has a plurality of memory card slots defined therein, each for accepting a memory card 28, so that a plurality of memory cards 28 can be inserted into the consumer game machine 11 at the same time. The memory card 28 is removable with respect to the memory card slot and stores various game data, such as saved data, or the like.

The controller 32 is a general purpose operation input means, via which the game player inputs various game operations. The input/output processing unit 30 scans the states of the respective units of the controller 32 in a constant cycle (for example, every 1/60th second) and sends an operation signal about the scanning result to the microprocessor 14 via the bus 12. The microprocessor 14 determines the game operation carried out by the game player, based on an operation signal. The consumer game machine 11 is adapted to connection to a plurality of controllers 32, and the microprocessor 14 controls a game based on the operation signals input from the respective controllers 32.

In the following, image processing carried out in a consumer game machine 11 having the above-described hardware structure for improving the realism of a game screen image will be described in detail.

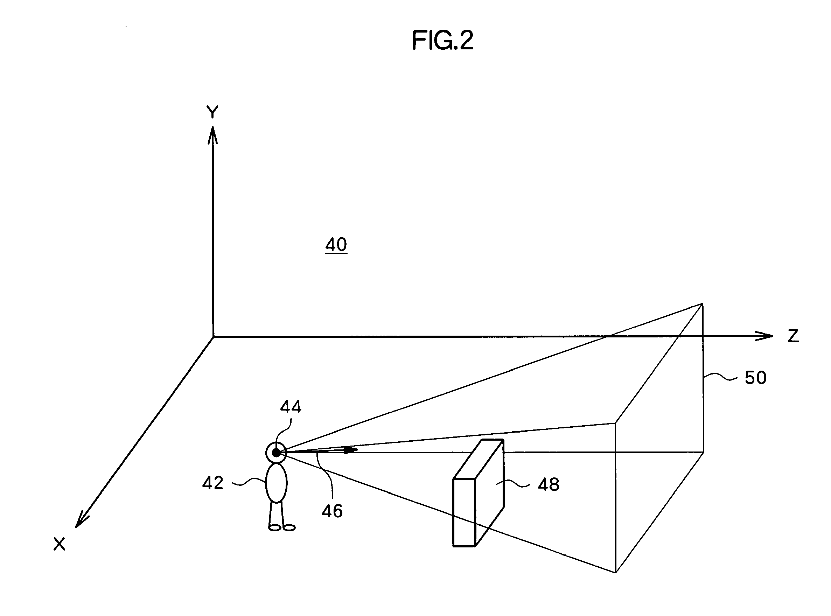

Fig. 2 is a diagram showing a game space (a virtual three dimensional space) created in the main memory 26 of the game machine 10. As shown, objects, such as a player game character object 42, a building object 48, and so forth, are placed in a game space 40, and a viewpoint 44 is defined at a position corresponding to the eyes of the player game character object 42. For the viewpoint 44, a viewing direction 46 is defined so that a space area in a quadrangular pyramid which extends in the viewing direction 46 with the viewpoint 44 as a vertex serves as a view range 50 of the player game character object 42. In the game machine 10, a screen image showing a picture obtained by viewing from the viewpoint 44 in the viewing direction 46 is produced using publicly known three dimensional image processing techniques, and displayed on the monitor 18.

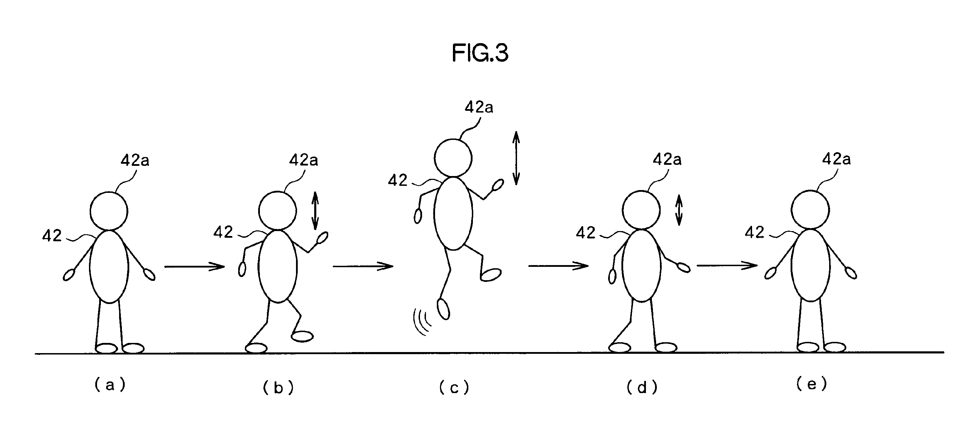

The player game character object 42 is an object to be controlled by the controller 32, and as shown in Fig. 3 is designed to (a) stop moving, (b) run, (c) jump, and so forth, in the game space 40 according to the content of an operation signal input from the controller 32. Then, as the player game character object 42 (b) runs or (c) jumps, the head portion 42a of the player game character object 42 oscillates up and down (b to d). While the player game character object 42 keeps standing still in the game space 40, the extent of oscillation of the head portion 42a becomes smaller until the head portion 42a eventually remains still (e). The extent of oscillation is determined based on the oscillation parameter stored in the main memory 26. The value of the oscillation parameter becomes larger as the player game character object 42 runs or jumps in the game space 40, and smaller as the player game character object 42 remains still. The larger the oscillation parameter value is, the more the head portion 42a of the player game character object 42 oscillates.

In this game machine 10, the viewpoint 44 is defined at the position of the eyes of the head portion 42a of the player game character object 42. As the head portion 42a oscillates up and down, as described above, the viewpoint 44 accordingly oscillates up and down. The extent of oscillation is determined based on the oscillation parameter value, similar to the head portion 42a of the player game character object 42. The larger the oscillation parameter is, the largely the viewpoint 44 oscillates. It should be noted that although it is arranged here that the viewpoint 44 oscillates, that is, the position coordinates of the viewpoint 44 fluctuate up and down as time passes, the viewing direction 46 may be changed up and down as time passes.

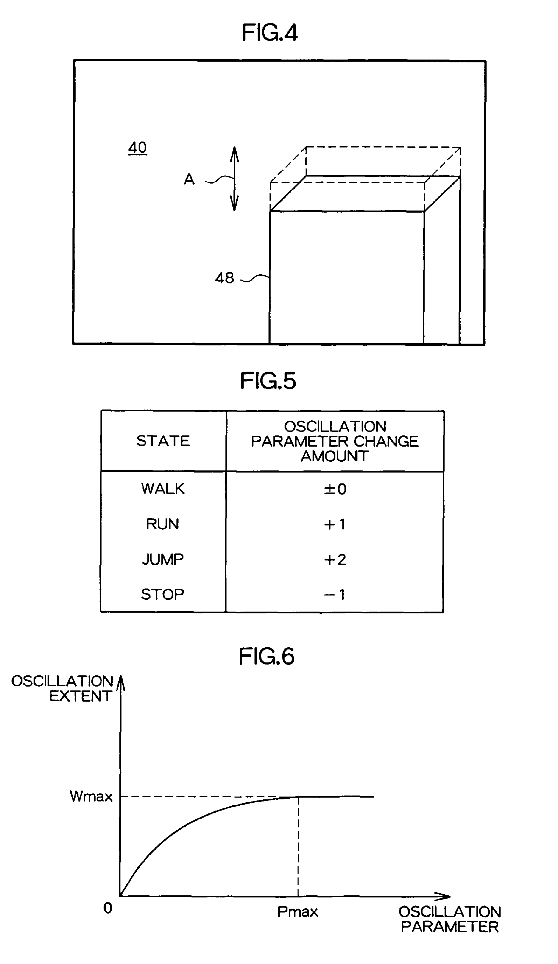

Fig. 4 is a diagram showing one example of a screen image shown on the monitor 18. The shown screen image is an image of a picture obtained by viewing from the viewpoint 44 in the viewing direction 46, which specifically shows a building object 48 placed in the game space 40. As shown, in this game machine 10, as the viewpoint 44 or the viewing direction 46 oscillates according to the oscillation parameter value, as described above, the content of the screen image oscillates up and down, as indicated by the arrow A in the drawing. The extent of oscillation changes according to the state of the player game character object 42 as described above. Therefore, when the player game character object 44 runs or jumps and becomes tired, or is recovered from fatigue after remaining still for a while, such conditions of the player game character object 44 can be reflected in the screen image, and the realism is improved.

In the following, image processing by the game machine 10 will be described.

Fig. 5 is a diagram showing an oscillation parameter change amount table for use in updating the oscillation parameter. As shown, the change amount of the oscillation parameter is defined for each movement kind (that is, a moving state of the viewpoint 44) of the player game character object 42. Specifically, with the player game character object 42 walking (moving at a first moving speed), the oscillation parameter remains the same; with the player game character object 42 running (moving at a second speed faster than the first moving speed), the oscillation parameter is sequentially incremented by one; and with the player game character object 42 jumping (walking at a third moving speed faster than the above mentioned second moving speed), the oscillation parameter is sequentially incremented by two. With the player game character object 42 remaining still, the oscillation parameter is sequentially decreased by one.

Fig. 6 is a diagram showing an oscillation extent table for use in obtaining an extent of oscillation of the viewpoint 44 or the viewing direction 46 based on the thus updated oscillation parameter. As shown in Fig. 6, the oscillation extent table shows the relationship between an oscillation parameter value and an oscillation extent value in which, specifically, increase of the oscillation parameter from 0 to Pmax leads to increase of the oscillation extent from 0 to Wmax. With the oscillation parameter equal to or larger than Pmax, the oscillation extent remains Wmax.

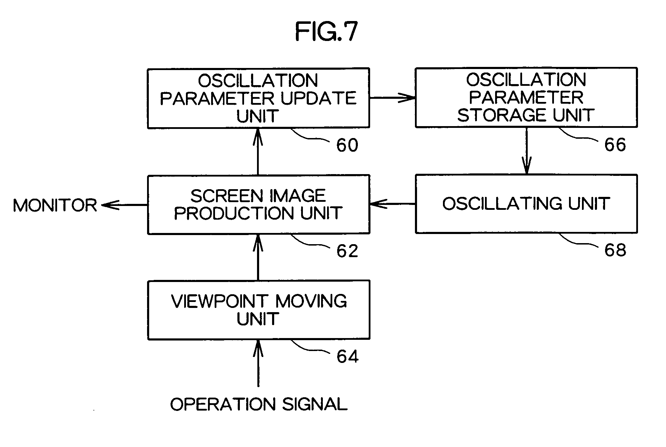

Fig. 7 is a functional block diagram for the present game machine 10. As shown, the game machine 10 comprises, in terms of function, an oscillation parameter update unit 60, a screen image production unit 62, a viewpoint moving unit 64, an oscillation parameter storage unit 66, and an oscillating unit 68. These functions are realized by carrying out a game program in the consumer game machine 11 according to an embodiment of the present invention. The game program may be stored in the DVD-ROM 25, and read into the consumer game machine 11. Alternatively, the game program may be downloaded from a remote computer via a network adapter which the consumer game machine 11 may have for connection to a data communication network, such as the Internet, or the like.

The screen image production unit 62 stores the position and posture of an object, such as the player game character object 42, the building object 48, or the like, placed in the game space 40, the position of the viewpoint 44, the viewing direction 46, and the kind of the current motion of the player game character object 42, then produces a screen image showing a picture obtained by viewing from the viewpoint 44 in the viewing direction 46 on a real time basis, and displays the produced screen image on the monitor 18 on a real time basis.

The viewpoint moving unit 64 moves the player game character object 42 and the viewpoint 44, which moves following the player game character object 42, according to an operation signal input from the controller 32. Specifically, the kind of motion of the player game character object 42, (whether walking, running, jumping, or remaining still), that is, the movement state of the viewpoint 44, is determined based on an operation signal, and the result of the determination is notified to the screen image production unit 62. The screen image production unit 62 updates the position and posture of the player game character object 42, the position of the viewpoint 44, and the viewing direction 46 according to the notified motion kind of the player game character object 42.

The oscillation parameter update unit 60 changes the oscillation parameter stored in the oscillation parameter storage unit 66 according to the movement of the viewpoint 44 in the game space 40. Specifically, the motion kind of the player game character object 42, stored in the screen image production unit 62, is obtained, and an oscillation parameter change amount corresponding to the motion kind is read from the oscillation parameter change amount table. Then, the oscillation parameter stored in the oscillation parameter storage unit 66 is updated according to the read oscillation parameter change amount.

The oscillating unit 68 reads the thus updated oscillation parameter from the oscillation parameter storage unit 66, and obtains an oscillation extent based on the value while referring to the oscillation extent table. Then, the oscillating unit 68 instructs the screen image production unit 62 to oscillate the viewpoint 44 or the viewing direction 46 up and down by an extent corresponding to the obtained oscillation extent.

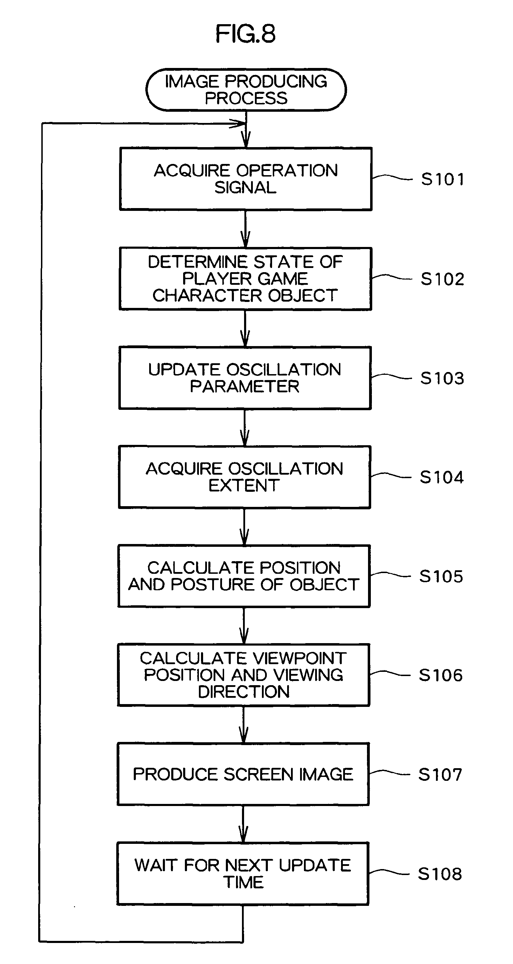

Fig. 8 is a flowchart of image processing carried out in the game machine 10. As shown, in the image processing according to the game machine 10, an operation signal input from the controller 32 is obtained by the viewpoint moving unit 64 (S101), which then determines the motion kind of the player game character object 42, based on the content of the operational signal (S102). The result of this determination is notified to the screen image production unit 62. The oscillation parameter update unit 60 obtains the motion state of the player game character object 42 from the screen image production unit 62, then obtains a oscillation parameter change amount corresponding to the motion state from the oscillation parameter change amount table, and updates the oscillation parameter stored in the oscillation parameter storage unit 66 according to the value (S103).

Thereafter, the oscillating unit 68 reads an oscillation parameter from the oscillation parameter storage unit 66, and obtains an oscillation extent based on the value while referring to the oscillation extent table (S104). The oscillating unit 68 instructs the screen image production unit 62 to oscillate the screen image based on the oscillation extent. According to the instruction from the oscillating unit 68, the screen image production unit 62 calculates the position and posture of the player game character object 42 and other object (S105) and also the position of the viewpoint 44 and the viewing direction 46 (S106). Then, based on the results of the calculations made in S105 and S106, a screen image is produced (S107). The thus produced screen image is shown on the monitor 18. Thereafter, the next time at which to update the screen image is waited for (S108) before the process at S101 to S107 is carried out.

According to the above described game machine 10, when the viewpoint 44 is made to move following the player game character object 42 and the player game character object 42 is made to move in the game space 40 according to an operation signal input from the controller 32, the viewpoint 44 or the viewing direction 46 can be made to oscillate according to the content of the motion. This allows the player viewing the screen image shown on the monitor 18 to feel as if the player game character object 42 has become tired or has recovered from fatigue. With the above, the realism of the screen image shown on the monitor 18 can be improved.

## Claims

1. A game machine for producing a screen image on a real time basis, the screen image showing a picture obtained by viewing from a predetermined viewpoint defined in a game space in a predetermined viewing direction, and displaying the screen image on a real time basis, comprising:
viewpoint moving means for moving a position of the viewpoint in the game space;
oscillation parameter update means for changing a predetermined oscillation parameter according to movement of the viewpoint in the game space; and
oscillating means for oscillating the position of the viewpoint or the viewing direction in the game space according to the predetermined oscillation parameter.

2. The game machine according to claim 1, wherein
a character object is placed in the position of the viewpoint in the game space, and
the viewpoint moving means causes the position of the viewpoint to move following the character object.

3. The game machine according to claim 2, wherein the oscillating means causes at least a part of the character object to further oscillate according to the predetermined oscillation parameter.

4. The game machine according to any of claims 1 to 3, wherein the oscillation parameter update means changes the predetermined oscillation parameter by a value according to a moving speed at which the viewpoint moves in the game space.

5. The game machine according to claim 1, wherein the oscillation parameter update means changes the predetermined oscillation parameter according to elapse of time.

6. A game machine image processing method for producing a screen image on a real time basis, the screen image showing a picture obtained by viewing from a predetermined viewpoint defined in a game space in a predetermined viewing direction, and displaying the screen image on a real time basis, comprising:
a viewpoint moving step of moving the position of the viewpoint in the game space;
an oscillation parameter update step of changing a predetermined oscillation parameter according to movement of the viewpoint in the game space; and
an oscillating step of oscillating the position of the viewpoint or the viewing direction in the game space according to the predetermined oscillation parameter.

7. An information storage medium recording a program for causing a computer to function as:
image processing means for producing a screen image on a real time basis, the screen image showing a picture obtained by viewing from a predetermined viewpoint defined in a game space in a predetermined viewing direction, and displaying the screen image on a real time basis;
viewpoint moving means for moving a position of the viewpoint in the game space;
oscillation parameter update means for changing a predetermined oscillation parameter according to movement of the viewpoint in the game space; and
oscillating means for oscillating the position of the viewpoint or the viewing direction in the game space according to the predetermined oscillation parameter.
